(19) Europäisches Patentamt
European Patent Office
Office européen des brevets

(11) **EP 3 614 342 A1**

(12) **EUROPEAN PATENT APPLICATION**
published in accordance with Art. 153(4) EPC

(43) Date of publication:
**26.02.2020  Bulletin 2020/09**

(51) Int Cl.:
***G06T 7/60*** *(2017.01)*      ***G06T 7/00*** *(2017.01)*

(21) Application number: **18788117.2**

(86) International application number:
**PCT/JP2018/016313**

(22) Date of filing: **20.04.2018**

(87) International publication number:
**WO 2018/194158 (25.10.2018 Gazette 2018/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **21.04.2017   JP 2017084556**

(71) Applicants:
• **Kabushiki Kaisha Toshiba**
**Minato-ku**
**Tokyo 105-8001 (JP)**

• **Toshiba Infrastructure Systems & Solutions Corporation**
**Kawasaki-shi, Kanagawa 212-0013 (JP)**

(72) Inventors:
• **FUTAGAMI Takuya**
**Tokyo 105-8001 (JP)**
• **TAKAHASHI Yusuke**
**Tokyo 105-8001 (JP)**
• **KOBAYASHI Hiroyuki**
**Tokyo 105-8001 (JP)**
• **KAMO Yushi**
**Tokyo 105-8001 (JP)**

(74) Representative: **AWA Sweden AB**
**Junkersgatan 1**
**582 35 Linköping (SE)**

(54) **TRAJECTORY IDENTIFICATION DEVICE, PROGRAM, AND TRAJECTORY IDENTIFICATION METHOD**

(57)    A track identification device of an embodiment has an index deriving unit, an initial searching unit, a secondary searching unit, and a railway track recognizing unit. The index deriving unit derives an index indicating railway-track-likeness for each pixel or pixel group of a captured image of a train vehicle running direction. The initial searching unit selects one line segment for which an evaluation value of indices for pixels or pixel groups corresponding to a plurality of line segments connecting a first point and a second point in an upper end of an initial area and a third point and a fourth point in a lower end respectively is greater than an evaluation value of indices of other line segments. The secondary searching unit, with a point of an upper end of a selected line segment as a first reference point, selects a line segment among line segments included in a search region extending toward a top of the image for which an evaluation value of indices is greater than an evaluation value of indices of other line segments, and repeatedly executes an adoption of an upper end of the selected line segment as a next reference point. The track recognizing unit recognizes a railway track based on results of processes by the initial searching unit and the secondary searching unit.

FIG. 2

**Description**

FIELD

Embodiments described herein relate to a railway track recognition apparatus, a program, and a railway track recognition method.

BACKGROUND

A device that detects a railway track from an image with an object of inspecting a railway track or detecting an obstacle existing within a railway track is already known. This kind of device, for example, detects a railway track by matching a captured image and a template prepared in advance, or detects a railway track, on which a vehicle is travelling, using an image captured by a stereo camera. However, there is a case in which the existing device cannot accurately detect a railway track.

Citation List

Patent Literature

PATENT LITERATURE 1: JP-A-2016-91506
PATENT LITERATURE 2: JP-A-2000-32601

SUMMARY

Technical Problem

An object of the invention is to provide a railway track recognition apparatus, a program, and a railway track recognition method such that a railway track can be more accurately detected.

Solution to Problem

A railway track recognition apparatus according to an embodiment has an index deriving unit, an initial searching unit, a secondary searching unit, and a railway track recognizing unit. The index deriving unit derives an index indicating a railway-track-likeness for each pixel or pixel group of a captured image of a train vehicle running direction. The initial searching unit, in a preset initial area for the captured image, extracts a plurality of line segments connecting at least a first point and a second point on an upper end of the initial area and at least a third point and a fourth point on a lower end respectively, and selects one line segment for which an evaluation value of indices derived by the index deriving unit for pixels or pixel groups corresponding to the line segment is greater than an evaluation value of indices derived by the index deriving unit for pixels or pixel groups corresponding to other line segments. The secondary searching unit, with a position of an upper end of a line segment selected by the initial searching unit as a first reference position, selects a line segment among line segments included in a search region extending toward a top of the image for which an evaluation value of indices is greater than an evaluation value of indices of other line segments, and repeatedly executes an adoption of an upper end of the selected line segment as a next reference position. The railway track recognizing unit recognizes a railway track based on results of processes by the initial searching unit and the secondary searching unit.

BRIEF DESCRIPTION OF DRAWINGS

Fig. 1 is a configuration drawing of a vehicle system 1 including a railway track recognition device 20.
Fig. 2 is a functional configuration drawing of the railway track recognition device 20.
Fig. 3 is a flowchart showing a flow of a process executed by the railway track recognition device 20.
Fig. 4 is a drawing schematically showing an image captured by an image capturing unit 10.
Fig. 5 is a drawing showing a result of obtaining a luminance gradient from the image shown in Fig. 4.
Fig. 6 is a drawing showing an example of a bird's eye image after a luminance gradient is obtained.
Fig. 7 is a drawing showing an aspect wherein a plurality of lines are established in an initial area AR1.
Fig. 8 is a drawing for describing a process of identifying a characteristic point.
Fig. 9 is a drawing for describing a process of establishing a plurality of lines based on a characteristic point.
Fig. 10 is a drawing showing details of point information 56.
Fig. 11 is a drawing showing an original image in which characteristic points are plotted.
Fig. 12 is a drawing for describing an example of a determination area.
Fig. 13 is a drawing schematically showing a processed image.
Fig. 14 is a drawing for describing an establishment of a virtual line.
Fig. 15 is a drawing showing an example of an original image in which railway track distribution information 60 is reflected.
Fig. 16 is a drawing showing a functional configuration of a railway track recognition device 20A of a third embodiment.
Fig. 17 is a drawing for describing a process of establishing an initial area.

DESCRIPTION OF EMBODIMENTS

Hereafter, a railway track recognition device, a program, and a railway track recognition method of an embodiment will be described, referring to the drawings.

First Embodiment

Configuration

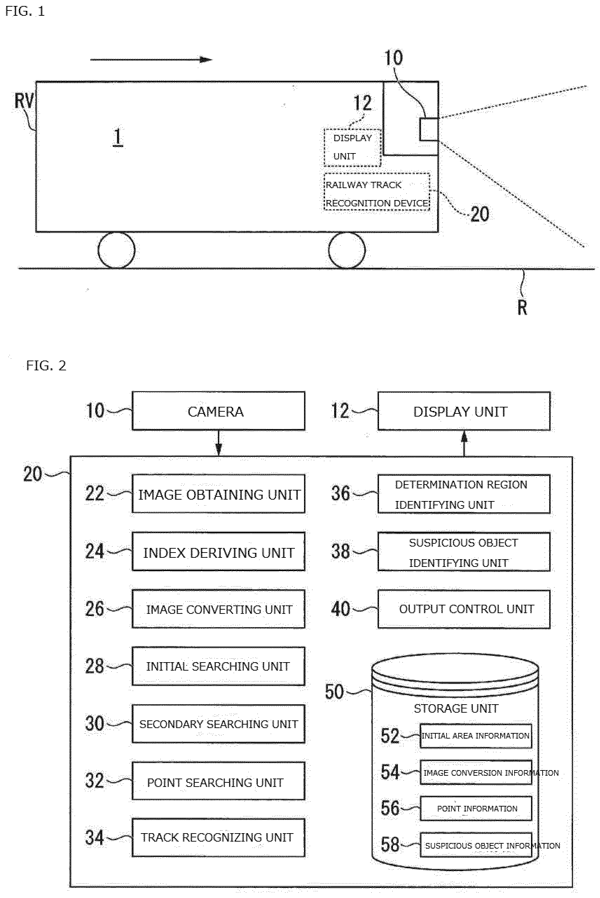

Fig. 1 is a configuration drawing of a vehicle system 1 including a railway track recognition device 20. The vehicle system 1 is a system mounted in a railway vehicle RV that travels on a railway track R. The vehicle system 1 includes, for example, an image capturing unit 10, a display unit 12, and the railway track recognition device 20. The image capturing unit 10 is provided in a driver's seat or the like of the railway vehicle RV, and captures images in a travelling direction of the railway vehicle RV (the direction of the arrow in Fig. 1). The capturing unit 10, for example, captures images in a direction in which the railway track R extends, as shown in Fig. 1. The display unit 12 displays various kinds of image.

Fig. 2 is a functional configuration drawing of the railway track recognition device 20. The railway track recognition device 20 includes, for example, an image obtaining unit 22, an index deriving unit 24, an image converting unit 26, an initial searching unit 28, a secondary searching unit 30, a point searching unit 32, a track recognizing unit 34, a determination region identifying unit 36, a suspicious object monitoring unit 38, an output control unit 40, and a storage unit 50. Part or all of the image obtaining unit 22, the index deriving unit 24, the image converting unit 26, the initial searching unit 28, the secondary searching unit 30, the point searching unit 32, the track recognizing unit 34, the determination region identifying unit 36, the suspicious object monitoring unit 38, and the output control unit 40 are realized by, for example, a processor such as a CPU (central processing unit) executing a program stored in the storage unit 50. Also, part or all of these functional units may be realized by hardware such as an LSI (large scale integration), an ASIC (application specific integrated circuit), or an FPGA (field-programmable gate array), and have a circuit configuration for realizing functions of the functional units, or may be realized by collaboration between software and hardware. The program may be stored in advance in a storage device such as an HDD (hard disk drive) or a flash memory, or may be stored in a removable storage medium such as a DVD or a CD-ROM, and installed in a storage device by the storage medium being mounted in a drive device.

The storage unit 50 is realized by, for example, a non-volatile storage medium such as a ROM (read only memory), a flash memory, an HDD (hard disk drive), or an SD card, and a volatile storage medium such as a RAM (random access memory) or a register. The storage unit 50 stores the program executed by the processor, and initial area information 52, image conversion information 54, point information 56, suspicious object information 58, and the like, to be described hereafter.

The image obtaining unit 22 obtains an image captured by the image capturing unit 10. The captured image is, for example, a color image. The index deriving unit 24, for example, converts a color image into a grayscale image or a binarized image, and derives an index indicating a railway-track-likeness for each pixel of the converted image. As a result, an index image composed of a pixel and an index (corresponding to the pixel is obtained. Also, instead of this, the index deriving unit 24 may derive an index indicating a railway-track-likeness for each pixel group wherein a predetermined number of pixels are grouped. The image converting unit 26 converts an index image generated by the index deriving unit 24 into a bird's eye image seen from air.

In an initial area preset for a bird's eye image converted from an index image, the initial searching unit 28 comprehensively extracts a plurality of line segments connecting one arbitrary point on an upper end of the initial area and one arbitrary point on a lower end. For example, the initial searching unit 28 extracts a plurality of line segments connecting at least a first point and a second point on the upper end of the initial area and at least a third point and a fourth point on the lower end respectively, and selects one line segment for which an evaluation value of indices derived by the index deriving unit 24 for pixels or pixel groups corresponding to the line segment is greater than an evaluation value of indices derived by the index deriving unit 24 for pixels or pixel groups corresponding to other line segments. A "line" is a region in which pixels, or pixel groups composed of pixels, extend in a predetermined direction. The initial searching unit 28 selects one line segment for which an evaluation value of indices derived by the index deriving unit 24 in the line is greater than that of other line segments. An evaluation value is a value indicating a railway-track-likeness. For example, the higher the evaluation value, the higher the probability that a line segment corresponding to the evaluation value is a railway track. The evaluation value may be an average value of indices, or may be a value such that indices have been processed using a predetermined evaluation function. In the following description, it will be assumed as an example that the evaluation value is the average value of indices.

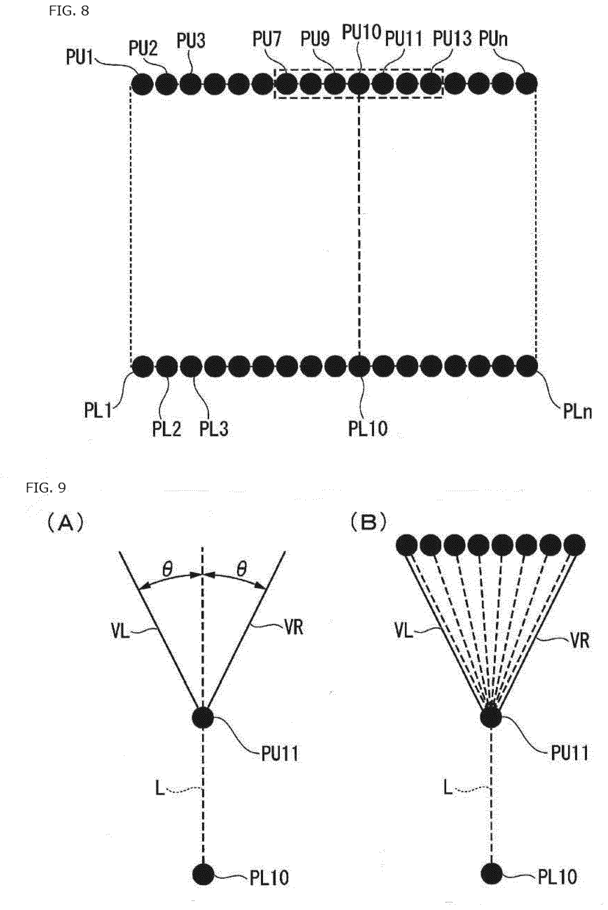

The secondary searching unit 30, with a point of an upper end of a line segment selected by the initial searching unit 28 as a first reference point, selects a line segment among line segments included in a search region extending toward a top of the image for which the evaluation value of indices is greater than the evaluation value of indices of other line segments, and repeatedly executes an adoption of an upper end of the selected line segment as the next reference point. A search region extending toward the top of the image is, for example, a region forming a fan-shaped form that needs a reference point (or a characteristic point). Also, the search region may be a region demarcated by a first virtual line (for example, VR in Fig. 9) extending a predetermined distance upward in the image from the reference point and a second virtual line (for example, VL in Fig. 9) extending a predetermined distance upward in the image from the reference point, which form a predetermined angle, and a third virtual line connecting an upper end of the first virtual line and an upper end of the second virtual line. The third virtual line may be, for example, a straight line, or may be a curved line.

The point searching unit 32 searches a predetermined range including the upper end of a line segment selected by the initial searching unit 28 or the secondary searching unit 30, identifies a characteristic point whose index is greater than that of other portions, and changes the reference point to the characteristic point.

The track recognizing unit 34 recognizes a railway track based on results of processes by the initial searching unit 28 and the secondary searching unit 30. Specifically, the rail recognizing unit 34 recognizes a line in which characteristic points identified by the point searching unit 32 are aligned as a railway track.

The determination region identifying unit 36 identifies a determination region (details will be described later) in an image based on information regarding a railway track recognized by the track recognizing unit 34. The suspicious object monitoring unit 38 determines whether or not a suspicious object exists in the determination region. When it is determined by the suspicious object monitoring unit 38 that a suspicious object exists in the determination region, the output control unit 40 correlates information indicating that a suspicious object exists to an image captured by the capturing unit 10, and controls the display unit 12 to display the image.

Process Flow

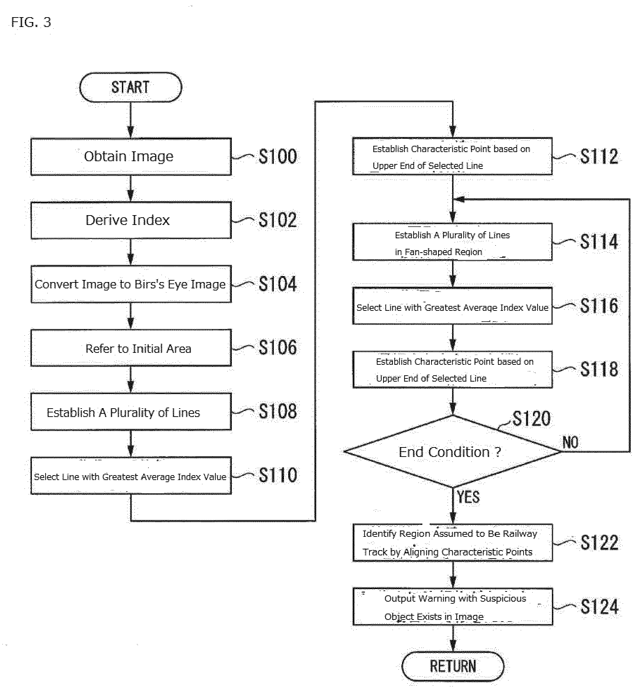

Hereafter, a process of each functional unit heretofore described will be described while referring to a flowchart. Fig. 3 is a flowchart showing a flow of a process executed by the track identification device 20.

Firstly, the image obtaining unit 22 obtaining an image (an original image) captured by the capturing unit 10 (step S100) . Next, the index deriving unit 24 derives an index based on the image obtained in step S100 (step S102). The index, which is a scale indicating a railway-track-likeness, is an index derived based on, for example, a luminance gradient between a pixel focused on and a neighboring pixel. Also, the index may be derived using a Sobel filter, a Laplacian filter, a Robinson filter, a Canny filter, or the like.

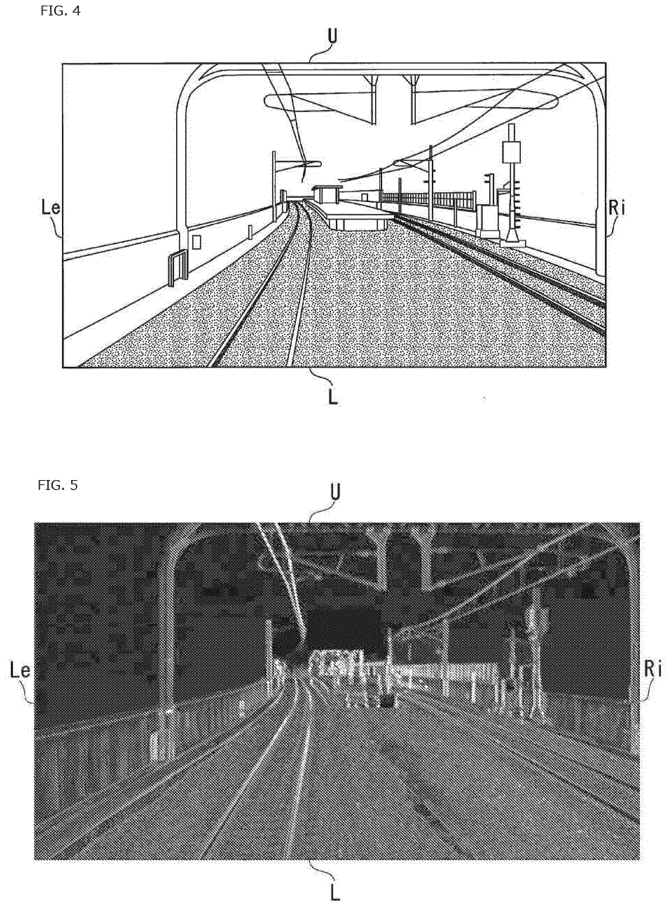

Fig. 4 is a drawing schematically showing an image captured by the capturing unit 10. In the following description, an upward direction in an image captured by the capturing unit 10 or in an image converted by the image converting unit 26 is defined as an upper end side U, a downward direction as a lower end side L, a right direction as a right end side Ri, and a left direction as a left end side Le.

Fig. 5 is a drawing showing a result of obtaining a luminance gradient from the image shown in Fig. 4. A railway track is formed of a material such as steel, and as steel has a low light reflectivity compared with stones (ballast) laid down along the railway track, there is a large difference in luminance between pixels corresponding to the railway track portion and pixels in the periphery thereof. As a result, there is a large luminance gradient in a region corresponding to the railway track portion, as shown in Fig. 5.

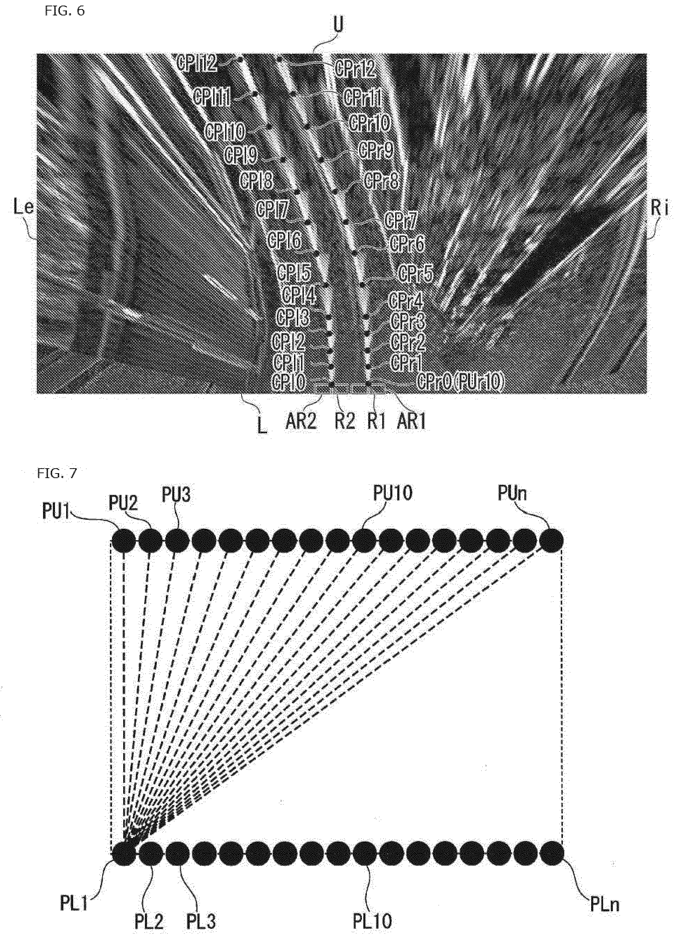

Next, the image converting unit 26, referring to the image conversion information 54, converts the image (original image) obtained in step S100 into a bird' s eye image (step S104) . An index in the original image is imparted to a point in the bird' s eye image corresponding to the point from which the index is derived. The image conversion information 54 is information indicating a preset conversion rules for converting an original image captured by the capturing unit 10 into a bird's eye image. The image conversion information 54 may be a map wherein pixels of the bird's eye image are correlated to pixels of the original image, or may be a function that outputs coordinates in the bird's eye image when coordinates in the original image are input. Fig. 6 is a drawing showing an example of a bird's eye image after a luminance gradient is obtained. A detailed description of Fig. 6 will be given hereafter.

Next, the initial searching unit 28 refers to the initial area information 52 stored in the storage unit 50 (step S106), and establishes a plurality of lines connecting one arbitrary place in an upper end and one arbitrary place in a lower end of an initial area in the bird's eye image (step S108). The initial area information 52 is information indicating a range of a region that is a region preset in the bird's eye image, includes a railway track along which the railway vehicle RV travels, and is positioned on the lower end side L of the bird' s eye image. The area information 52 is obtained in advance based on, for example, a position in the railway vehicle RV in which the capturing unit 10 is installed, and a region captured by the capturing unit 10 from the installation position. In the previously mentioned example of Fig. 6, an initial area AR1 including a railway track R1 on the right end side Ri and an initial area AR2 including a railway track R2 on the left end side Le correspond to initial areas.

Fig. 7 is a drawing showing an aspect wherein a plurality of lines are established in the initial area AR1. In Fig. 7, a plurality of lines connecting one arbitrary point among points (pixels or pixel groups) PU1 to PUn on the upper end side U of the initial area AR1 and one arbitrary point among points (pixels or pixel groups) PL1 to PLn on the lower end side L of the initial area AR1 are comprehensively established ("n" is an arbitrary positive integer) . In the example shown, a case in which the point PL1 is connected to each of PU1 to PUn is shown, but in the process of step S108, lines comprehensively connecting each of the points PL1 to PLn and each of the points PU1 to PUn are established. Also, the same process is carried out in the initial area AR2 as well.

Next, the initial searching unit 28 selects one line in each of the initial areas AR1 and AR2 for which the average index value included in the established line is greater than the index value included in the other lines (step S110) . More specifically, the initial searching unit 28 refers to the image conversion information 54, and selects the line for which the average index value is greatest based on indices corresponding to pixels included in the plurality of lines in the bird' s eye image. Using this process, lines approximating lines wherein pixels corresponding to the railway tracks R1 and R2 in the previously mentioned image of Fig. 6 are aligned are selected.

Next, the point searching unit 32 searches a predetermined range of the bird's eye image including an upper end (reference position) of the line selected by the initial searching unit 28, identifies a characteristic point whose index is greater than that of other points, and changes the reference point to the characteristic point (step S112) . The predetermined range is a line segment region having a predetermined width in a horizontal direction from the reference point identified by the point searching unit 32. The predetermined range may also be provided with width in a vertical direction from the reference point identified by the point searching unit 32, forming a rectangular region. Also, information (coordinates) regarding the identified characteristic point is stored in the storage unit 50 as the position information 56, to be described hereafter.

Fig. 8 is a drawing for describing a process of identifying a characteristic point. A description the same as that for Fig. 7 will be omitted. For example, it is assumed that the initial searching unit 28 selects the line connecting the point PL10 and the point PU10 included in the initial area AR1 as the line having the greatest average index value in the process of step S110. In this case, the point searching unit 32 compares the indices of each of the point PU10 and the points PU7 to PU9 and PU11 to PU13 extending in the horizontal direction from the point PU10, and selects, for example, the pixel having the greatest index as the characteristic point. In the embodiment, it is assumed that the point PU11 is selected as the characteristic point.

Next, the secondary searching unit 30 establishes a plurality of lines in a fan-shaped region (search region) in the bird's eye image based on the characteristic point identified by the point searching unit 32 (step S114). Fig. 9 is a drawing for describing a process of establishing a plurality of lines based on a characteristic point. For example, the secondary searching unit 30 establishes a region of a fan shape (or approximate fan shape) based on the characteristic point PU11 identified by the point searching unit 32, as shown in Fig. 9(A). The fan-shaped region is a region demarcated by the virtual lines VR and VL caused to extend in the upper end side U direction at an angle θ toward the right end side Ri and the left end side Le, with a line L selected by the initial searching unit 28 as a center, and the characteristic point PU11 identified by the point searching unit 32 as an origin.

The angle θ is a preset angle, and is, for example, an angle that can cover (encompass) a range of a maximum curvature regulated by a railway track standard or the like. Also, lengths of the virtual lines VR and VL are preset lengths. Further, the secondary searching unit 30 establishes a plurality of lines comprehensively connecting one arbitrary point in an upper end of the fan-shaped region and the characteristic point PU11, as shown in Fig. 9 (B). For example, the secondary searching unit 30 establishes a plurality of points at preset predetermined intervals in the horizontal direction in the upper end of the fan-shaped region, and establishes a plurality of lines comprehensively connecting each of the established points and the characteristic point PU11. The secondary searching unit 30 carries out a process the same as the heretofore described process based on the characteristic point identified in the initial area AR2.

Next, the secondary searching unit 30 selects the line among the plurality of established lines whose average index value is greater than that of the other lines (step S116) . More specifically, the secondary searching unit 30 refers to the image conversion information 54, and selects the line whose average index value is greater than the other lines based on indices corresponding to pixels included in the plurality of lines in the bird's eye image.

Next, the point searching unit 32 searches a predetermined range of the bird's eye image including an upper end (reference position) of the line selected by the secondary searching unit 30, identifies a characteristic point whose index is greater than that of other points, and changes the reference point to the characteristic point (step S118).

Next, the point searching unit 32 determines whether or not an end condition is satisfied (step S120) . An end condition is that a distance between two reference points (or characteristic pints) identified with the initial area AR1 and the initial area AR2 as origins is equal to or lower than a threshold, that the process of identifying a reference point carried out by the point searching unit 32 is carried out a predetermined number of times, that a reference point identified by the point searching unit 32 is farther to the upper end side than a predetermined point in the bird's eye image, or the like.

When no end condition is satisfied, the process of steps S114 to S118 is repeated. In this case, the secondary searching unit 30 establishes a plurality of lines in step S114 based on the characteristic point identified in step S118. By the process of steps S114 to S118 being repeated in this way, characteristic points are established at predetermined distances toward the upper end side U.

The previously mentioned Fig. 6 will be described. As shown in the drawing, a characteristic point CPr1 is established based on a characteristic point of the initial area AR1, a characteristic point CPr2 is identified based on the characteristic point CPr1, ..., and a characteristic point CPr12 is identified. In the same way, a characteristic point CPl1 is established based on a characteristic point of the initial area AR2, a characteristic point CPl2 is identified based on the characteristic point CPl1, ..., and a characteristic point CPl12 is identified.

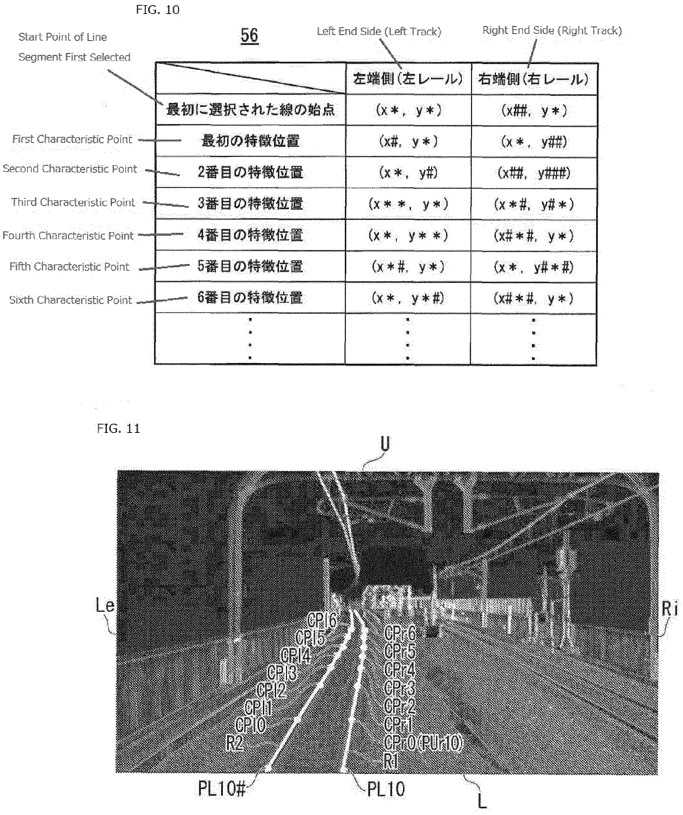

Also, information (coordinates) regarding an established characteristic point is stored in the storage unit 50 as the point information 56. Fig. 10 is a drawing showing details of the point information 56. The point information 56 is information indicating coordinates in an image (bird's eye image) of a characteristic point identified by the point searching unit 32. The point information 56 is, for example, arranged in accordance with an order of identified characteristic points. Specifically, characteristic points in the point information 56 are arranged in order of a starting point of a line selected in an initial area by the initial searching unit 28, a first characteristic point identified by the point searching unit 32, a second characteristic point identified by the point searching unit 32, ..., and an Nth ("N" is an arbitrary positive integer) characteristic point identified by the point searching unit 32. Also, identification information indicating a characteristic point on the right end side, or identification information indicating a characteristic point on the left end side, is correlated to a characteristic point identified by the point searching unit 32 in the point information 56.

When an end condition is satisfied, the track recognizing unit 34 refers to the point information 56, and identifies a region assumed to be a railwy track by aligning characteristic points identified by the point searching unit 32 (step S122). Specifically, the track recognizing unit 34 refers to the point information 56, and plots characteristic points identified by the point searching unit 32 in an original image. Fig. 11 is a drawing showing an original image in which characteristic points are plotted. For example, as shown in the drawing, characteristic points (CP10, CPr0 (= PUr10)) identified by the point searching unit 32, and first characteristic points (CP11, CPr1) to Nth (for example, CP12, CPr2 to CP16, CPr6, and the like) characteristic points identified by the point searching unit 32, are plotted.

Furthermore, the track recognizing unit 34 refers to the point information 56, connects a starting point (PL10, PL10#) of a line selected in an initial area and a first characteristic point identified by the point searching unit 32, connects the first characteristic point and a second characteristic point, ..., and connects an Nth - 1 characteristic point and an Nth characteristic point. This process is carried out with respect to characteristic points on the left end side and characteristic points on the right end side. By the process being carried out in this way, the regions R1 and R2 assumed to be railway tracks are identified. The heretofore described process is such that characteristic point coordinates included in the point information 56 may be output to another functional unit or device unchanged as coordinates corresponding to a bird's eye image, or the characteristic points may be plotted in a bird's eye image.

Next, the railway track recognition device 20 determines whether or not a suspicious object exists in a vicinity of the railway track, and controls the display unit 12 to display a warning when a suspicious object exists (step S124). For example, firstly, the determination region identifying unit 36 identifies a determination region. The determination region is a region demarcated by the railway tracks R1 and R2 and a region in a vicinity thereof, and is a region in which a suspicious object existing is not allowed.

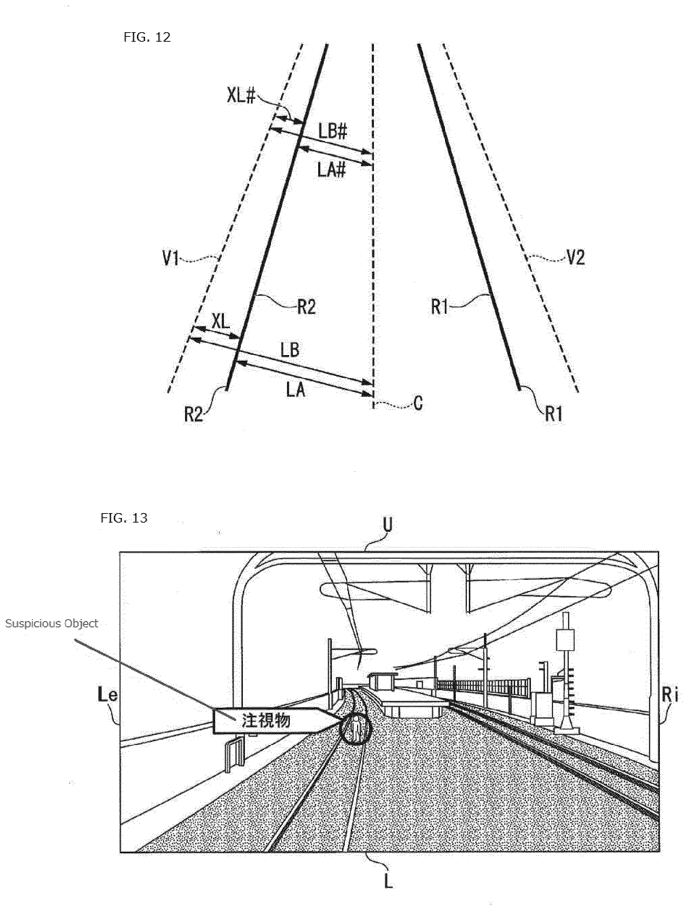

Fig. 12 is a drawing for describing an example of a determination region. The determination region identifying unit 36, for example, identifies a central line C that is a center of a distance in a horizontal direction between the rail track R1 and the rail track R2 in a predetermined point in an original image, and identifies a length LA of a line extending in a normal direction from the railway track R2 to the central line C. Also, the determination region identifying unit 36 identifies a length LB (a reference length) based on the identified length LA. The length LB is a length such that a length XL is added to a left end of the length LA. The length XL is a length by which the railway vehicle RV protrudes in a width direction beyond the railway track R2 when the railway vehicle RV travels along the railway track, or a length such that a predetermined length is added to the length by which the railway vehicle RV protrudes. The length XL is stored in, for example, the storage unit 50.

Furthermore, the determination region identifying unit 36, for example, identifies the central line C, which is the center of the interval in the horizontal direction between the railway track R1 and the railway track R2, farther to the upper end side in the original image than the point in which the length LB has been obtained the previous time, and identifies a length LA# of a line extending in the normal direction from the railway track R2 to the central line C. Also, the determination region identifying unit 36 identifies a length LB# (a reference length) based on the identified length LA#. A ratio between the length LA# and the length LB# is the same as a ratio between the length LA and the length LB. The determination region identifying unit 36 obtains a reference length farther to the upper end side U than a point in which a reference length has been obtained the previous time as far as a vicinity in which the railway track disappears from the original image. The heretofore described process is carried out in the same way on the railway track R1 side. Further, the determination region identifying unit 36 assumes a region demarcated by the virtual line V1, wherein the left ends of the reference lengths are connected in order of being obtained, and the virtual line V2, wherein the right ends of the reference lengths are connected in order of being obtained, to be the determination region.

Also, the suspicious object monitoring unit 38, for example, referring to the suspicious object information 58 and using an index derived by the index deriving unit 24, determines whether or not an image region coinciding with a suspicious object template exists within the determination region in the original image. For example, a plurality of suspicious object templates are stored in the suspicious object information 58. Coinciding, not being limited to coinciding perfectly, includes, for example, a resemblance between a form of an image region and a form correlated to a suspicious object template being equal to or greater than a threshold. The suspicious object monitoring unit 38 may acquire an image captured by a stereo camera, and determine whether or not a suspicious object exists based on the acquired image and the suspicious object information 58. In this case, a template indicating a three-dimensional form of a suspicious object is included in the suspicious object information 58.

When it is determined by the suspicious object monitoring unit 38 that a suspicious object exists within the determination region, the output control unit 40 acquires information regarding the image region corresponding to the suspicious object from the suspicious object monitoring unit 38, identifies the acquired image region, and correlates information indicating that a suspicious object exists in the identified image region to the original image. Further, the output control unit 40 controls the display unit 12 to display the processed image on which the heretofore described process has been carried out. Fig. 13 is a drawing schematically showing a processed image. For example, when a scene wherein a person is encroaching into a determination region is captured by the capturing unit 10, a processed image including information indicating that a suspicious object exists is displayed on the display unit 12. The output control unit 40 may control a warning to be output by a speaker or the like provided in the railway vehicle RV. By so doing, an occupant of the railway vehicle RV can recognize that a suspicious object exists in the direction of travel of the railway vehicle RV. Further, the occupant can control the railway vehicle RV taking the existence of the suspicious object into consideration.

According to the heretofore described process, the railway track recognition device 20 can more accurately detect a railway track. Also, when a suspicious object exists within a detected railway track, the railway track recognition device 20 can notify an occupant with information indicating that the suspicious object exists.

Also, when a difference between inclinations of lines obtained by the process of step S110 or step S116 in the heretofore described process is equal to or greater than a reference angle, the angle can be ajdusted. By so doing, even when an object interferes with one railway track (the railway track on the right side or the left side), and a line differing from the railway track is selected, the railway track with which the object is assumed to be interfering is complemented based on the other railway track. As a result, a region approximating the railway track with which the object is interfering can be identified in the image.

Also, when a distance between two selected lines exceeds a threshold preset based on a distance between railway tracks in the process described above, the initial searching unit 28 or the secondary searching unit 30 may adjust so that the distance between the two lines is equal to or less than the threshold. For example, in this case, the initial searching unit 28, for example, brings the two railway tracks closer to each other evenly.

By so doing, a railway track can be more accurately detected.

Also, in the process described above, the secondary searching unit 30 can more accurately identify a reference point by selecting a line whose average index value is greater than the other lines from among a plurality of lines established in a fan-shaped region in a bird's eye image. In particular, the secondary searching unit 30 can accurately identify a reference point on the upper end side U (that is, a region far from a train) in an original image.

Also, in the process described above, a predetermined range in a bird's eye image including an upper end of a line selected by the initial searching unit 28 or the secondary searching unit 30 is searched, and a characteristic point whose index is greater than that of other points is identified. A pixel whose index is greatest being selected as a characteristic point in this way means that even when a leading end of a line selected based on an average value in step S110 or step S116 differs from a pixel corresponding to an actual railway track, the leading end side of the line can be adjusted to a pixel corresponding to an actual railway track. Also, when an actual railway track is curving, a point corresponding to the railway track is more accurately identified by the leading end of a selected line being adjusted.

A process of changing of a reference point to a characteristic point may be omitted. In this case, information regarding the reference point is stored in the point information 56. Further, a region assumed to be a railway track is a region wherein reference points are connected. Also, in this case, a search region is a fan-shaped region centered on a reference point.

Also, in the process described above, when the secondary search unit 30 establishes a plurality of lines, the virtual lines VR and VL are established centered on the line L selected by the initial searching unit 28 or the secondary searching unit 30, however it is not limited thereto. For example, the secondary searching unit 30 may establish the virtual lines VR and VL taking a line selected by a process before the previous process into consideration.

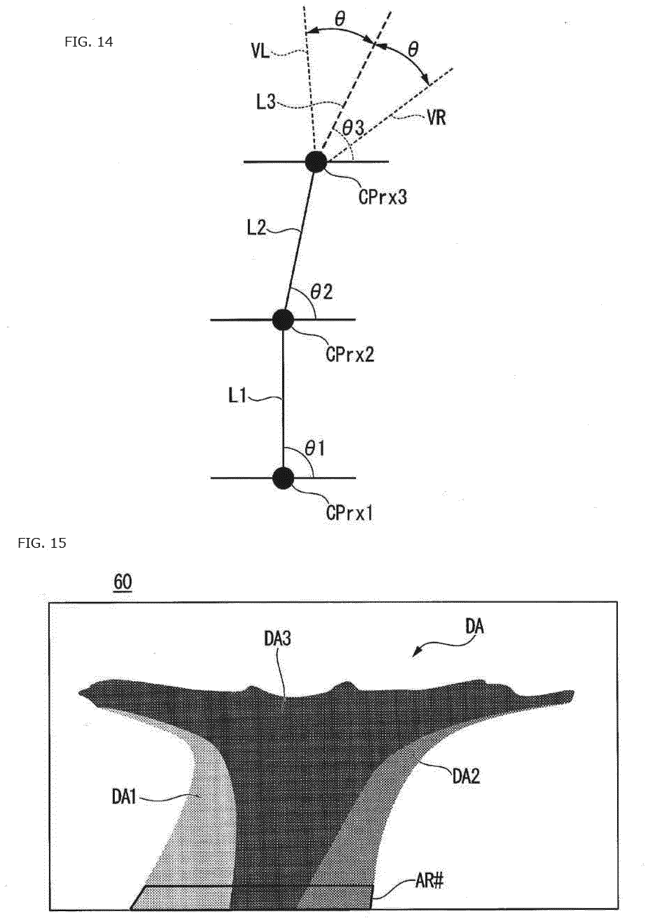

Fig. 14 is a drawing for describing an establishment of a virtual line. For example, it is assumed that reference points CPrx1 to CPrx3 are identified in that order. Also, it is assumed that when a plurality of lines are established based on the reference point CPrx1, an angle formed by a line L1, which forms a reference (center) when a virtual line is established, and a line extending in a horizontal direction in a bird's eye image is an angle $\theta1$. It is assumed that when a plurality of lines are established based on the reference point CPrx2, an angle formed by a line L2, which forms a reference when a virtual line is established, and a line extending in the horizontal direction in the bird's eye image is an angle $\theta2$. Also, it is assumed that when a plurality of lines are established based on the reference point CPrx3, an angle formed by a line L3, which forms a reference when a virtual line is established, and a line extending in the horizontal direction in the bird's eye image is an angle θ3. In this case, the angle 3 is obtained based on an Equation (1). By the angle θ3 being obtained in this way, a plurality of lines reflecting a curvature of a rail can be established, and a railway track can be more reliably included in a search region. The angle θ in the drawing is the angle θ that can cover a range of a maximum curvature regulated by a railway track standard or the like described using Fig. 9.

$$\theta 3 = \theta 2 + (\theta 2 - \theta 1) \qquad (1)$$

According to the heretofore described first embodiment, the railway track recognition device 20 has an initial searching unit 28 that, in an initial area preset in an image, extracts a plurality of line segments connecting one arbitrary point in an upper end of the initial area and one arbitrary point in a lower end, and selects one line segment for which an evaluation value of indices indicating a railway-track-likeness of the line segment derived by the index deriving unit 24 is greater than that of other line segments, the secondary searching unit 30 which, with a point of an upper end of the line segment selected by the initial searching unit 28 as a first reference point, selects a line segment among line segments included in a search region extending toward the top of the image for which the evaluation value of indices is greater than that of other line segments, and repeatedly executes an adoption of the upper end of the selected line segment as the next reference point, and the track recognizing unit 34, which derives a railway track based on results of processes by the initial searching unit 28 and the secondary searching unit 30, whereby a railway track can be more accurately detected.

Second Embodiment

In a second embodiment, a description has been given assuming that a single railway track is identified. As opposed to this, multiple railway tracks are identified in a second embodiment. Hereafter, a description will be given centered on differences from the first embodiment.

For example, railway track distribution information 60 is stored in the storage unit 50 of the second embodiment. The railway track distribution information 60 is information indicating a region in an image (an original image or a bird's eye image) in which there is a high possibility of it being assumed that a railway track exists. The railway track distribution information 60 is, for example, information obtained experimentally. Fig. 15 is a drawing showing an example of an original image in which the railway track distribution information 60 is reflected. In the drawing, a region DA is a distribution region in which there is a high possibility of it being assumed that a railway track exists. The region DA includes a region DA1, a region DA2, and a region DA3. The region DA1 is a distribution region in which there is a possibility of a left-side track, of left and right tracks along which the railway vehicle RV travels, existing, and the region DA2 is a distribution region in which there is a possibility of a right-side track, of the left and right tracks along which the railway vehicle RV travels, existing. Also, the region DA3 is a distribution region in which there is a possibility of the left-side or the right-side track, or the left-side and the right-side tracks, along which the railway vehicle RV travels existing.

Also, an initial area AR# is correlated to the railway track distribution information 60. The region DA corresponding to a railway track along which the railway vehicle RV in which the railway track recognition device 20 is mounted travels is shown in the example shown in the drawing, but furthermore, a distribution region in which a railway track (for example, a neighboring railway track) differing from the railway track along which the railway vehicle RV in which the railway track recognition device 20 is mounted travels is assumed to exist is included in the railway track distribution information 60.

In the initial area AR#, the initial searching unit 28 extracts a plurality of lines connecting one arbitrary point in an upper end of the initial area AR# and one arbitrary point in a lower end, selects two lines for which an evaluation value of indices included in the extracted line derived by the index deriving unit 24 is greater than an evaluation value of indices included in other lines, and assumes the two lines to be railway tracks. Also, the initial searching unit 28 carries out a process the same as the heretofore described process in an initial area (not shown) corresponding to a railway track differing from the railway track along which the railway vehicle RV in which the railway track recognition device 20 is mounted travels, and assumes the two lines to be a railway track differing from the railway track along which the railway vehicle RV in which the railway track recognition device 20 is mounted travels. Further, when the two assumed railway tracks satisfy a predetermined condition, the initial searching unit 28 specifies that the assumed railway tracks are railway tracks. A predetermined condition is that, for example, a distance between left sides (or right sides) of the two railway tracks in a horizontal direction in a bird's eye image of the railway tracks satisfies a set standard (distance range).

In a subsequent process, the point searching unit 32 carries out the same process as in the first embodiment on each of the selected lines, establishing reference points corresponding to the railway track along which the railway track RV travels and the railway track differing from that railway track.

According to the second embodiment described above, the railway track recognition device 20, in an initial area preset for each railway track in an image, extracts a plurality of lines connecting one arbitrary point in an upper end of the initial area and one arbitrary point in a lower end, selects one line for which an evaluation value of indices included in the extracted line is greater than an evaluation value of indices included in other lines, and carries out the same process as in the first embodiment on each of the selected lines, whereby a plurality of lines can be identified.

Third Embodiment

In a third embodiment, a railway track is identified by referring to past processing results of the railway track recognition device 20. Hereafter, a description will be given centered on differences from the first embodiment.

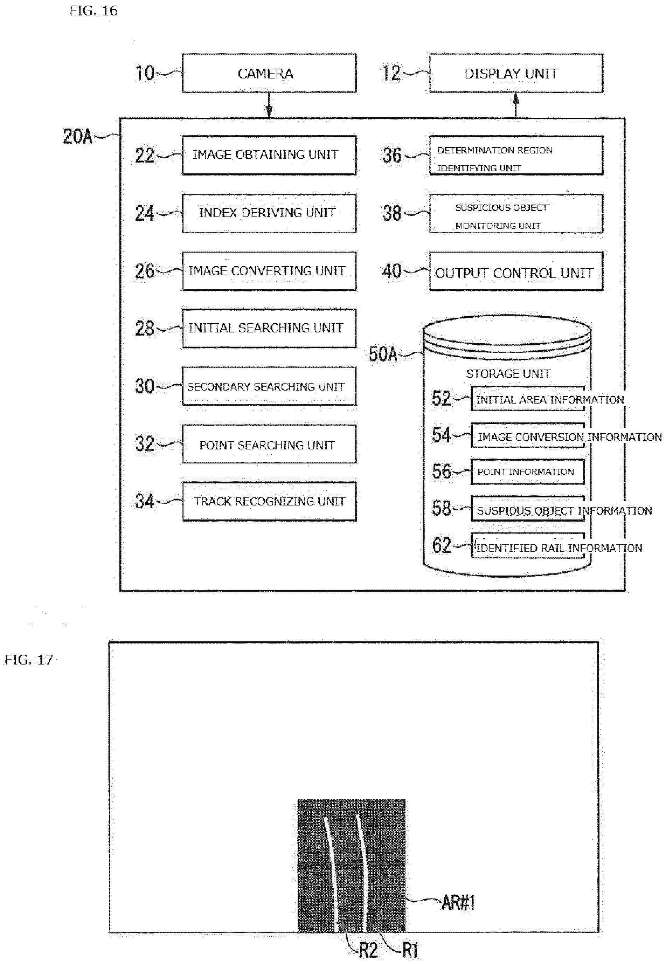

Fig. 16 is a drawing showing a functional configuration of a railway track recognition device 20A of the third embodiment. The railway track recognition device 20A includes an initial searching unit 28A and a storage unit 50A instead of the initial searching unit 28 and the storage unit 50 of the first embodiment. Specific track information 62 is stored in the storage unit 50A. The identified rail information 62 is information regarding a reference point identified in the past, and information regarding a region assumed to be a railway track identified by the track recognizing unit 34.

The initial searching unit 28A refers to the specific track information 62, and establishes an initial area. Fig. 17 is a drawing for describing a process of establishing an initial area. The initial searching unit 28A plots the regions R1 and R2 assumed to be railway tracks on the previous occasion (the regions R1 and R2 assumed to be railway tracks a predetermined time before) and included in the specific track information 62 on a bird' s eye image that is a processing target, and establishes a predetermined region encompassing the plotted region R1 and region R2 as an initial area AR#1. The initial searching unit 28A, in the initial area AR#1, extracts a plurality of lines connecting one arbitrary point in an upper end of the initial area AR#1 and one arbitrary point in a lower end, and selects one line for which an evaluation value of indices included in the extracted line derived by the index deriving unit 24 is greater than an evaluation value of indices included in other lines. Further, the railway track recognition device 20A identifies a reference point in the same way as in the first embodiment, thereby identifying a region assumed to be a railway track.

According to the heretofore described third embodiment, the railway track recognition device 20 determines the initial area AR#1 by referring to the regions R1 and R2 assumed to be railway tracks on the previous occasion and included in the specific track information 62, whereby the same advantages as in the first embodiment can be achieved.

According to at least one of the embodiments described above, a railway track can be more accurately detected by having an index deriving unit that derives an index indicating a railway-track-likeness for each pixel or pixel group in an image in which a direction of travel of a railway vehicle is captured, an initial searching unit that, in an initial area preset in the image, extracts a plurality of line segments connecting at least a first point and a second point in an upper end of the initial area and at least a third point and a fourth point in a lower end respectively, and selects one line segment for which an evaluation value of indices derived by the index deriving unit for pixels or pixel groups corresponding to the line segment is greater than an evaluation value of indices derived by the index deriving unit for pixels or pixel groups corresponding to other line segments, a secondary searching unit that, with a point of an upper end of a line segment selected by the initial searching unit as a first reference point, selects a line segment among line segments included in a search region extending toward a top of the image for which the evaluation value of indices is greater than the evaluation value of indices of other line segments, and repeatedly executes an adoption of the upper end of the selected line segment as the next reference point, and a railway track deriving unit that derives a railway track based on results of processes by the initial searching unit and the secondary searching unit.

Although some embodiments of the invention have been described, these embodiments are presented as examples, and are not intended to limit the scope of the invention. The embodiments can be implemented in various other forms, and various omissions, replacements, and changes can be carried out without departing from the gist of the invention. The embodiments and modifications thereof are included in the scope and gist of the invention, and in the same way, are included in the invention described in the patent claims and an equivalent scope thereof.

**Claims**

1. A railway track recognition device, comprising:

an index deriving unit which derives an index indicating railway-track-likeness for each pixel or pixel group of a captured image of a train vehicle running direction;
an initial searching unit which, in an initial area preset in the image, extracts a plurality of line segments connecting at least a first point and a second point in an upper end of the initial area and at least a third point and a fourth point in a lower end respectively, and selects one line segment for which an evaluation value of indices derived by the index deriving unit for pixels or pixel groups corresponding to the line segment is greater than an evaluation value of indices derived by the index deriving unit for pixels or pixel groups corresponding to other line segments;
a secondary searching unit that, with a point of an upper end of a line segment selected by the initial searching unit as a first reference point, selects a line segment among line segments included in a search region extending toward a top of the image for which an evaluation value of indices is greater than an evaluation value of indices of other line segments, and repeatedly executes an adoption of an upper end of the selected line segment as a next reference point; and

a track recognizing unit that recognizes a railway track based on results of processes by the initial searching unit and the secondary searching unit.

2. The railway track recognition device according to claim 1, wherein the search region is a region that has a reference point as a center point and extends in a fan form toward the top of the image, or a region demarcated by a first virtual line extending a predetermined distance upward in the image from the reference point and a second virtual line extending a predetermined distance upward in the image from the reference point, which form a predetermined angle, and a third virtual line connecting an upper end of the first virtual line and an upper end of the second virtual line.

3. The railway track recognition device according to claim 1 or claim 2, further comprising a point searching unit which searches a predetermined range including an upper end of a line segment selected by the initial searching unit or the secondary searching unit, identifies a characteristic point whose index is greater than that of other points, and changes the reference point to the characteristic point.

4. The railway track recognition device according to claim 3, wherein the predetermined range is a line segment region extending in a horizontal direction in the image with the upper end as a center, or a rectangular region that also has a width in a vertical direction in the image.

5. The railway track recognition device according to any one of claims 1 to 4, further comprising a converting unit that converts the image into an image seen from air, wherein the initial searching unit and the secondary searching unit establish the reference point in an image converted by the converting unit.

6. A program that causes a computer to derive an index indicating railway-track-likeness for each pixel or pixel group of a captured image of a train vehicle running direction,

extract, in an initial area preset in the image, a plurality of line segments connecting at least a first point and a second point in an upper end of the initial area and at least a third point and a fourth point in a lower end respectively,

select one line segment for which an evaluation value of indices derived for pixels or pixel groups corresponding to the line segment is greater than an evaluation value of indices derived for pixels or pixel groups corresponding to other line segments,

select a line segment, among line segments included in a search region extending toward a top of the image, for which an evaluation value of indices is greater than an evaluation value of indices of other line segments, with a point of an upper end of the selected line segment as a first reference point,

repeatedly execute an adoption of an upper end of the selected line segment as a next reference point, and

derive a railway track based on results of the selection processes.

7. A railway track recognition method such that a computer

derives an index indicating railway-track-likeness for each pixel or pixel group of a captured image of a train vehicle running direction,

extracts, in an initial area preset in the image, a plurality of line segments connecting at least a first point and a second point in an upper end of the initial area and at least a third point and a fourth point in a lower end respectively,

selects one line segment for which an evaluation value of indices derived for pixels or pixel groups corresponding to the line segment is greater than an evaluation value of indices derived for pixels or pixel groups corresponding to other line segments,

selects a line segment, among line segments included in a search region extending toward a top of the image, for which an evaluation value of indices is greater than an evaluation value of indices of other line segments, with a point of an upper end of the selected line segment as a first reference point,

repeatedly executes an adoption of an upper end of the selected line segment as a next reference point, and

derives a railway track based on results of the selection processes.

FIG. 1

FIG. 2

| | | | |
|---|---|---|---|
| 10 | CAMERA | 12 | DISPLAY UNIT |

20

| 22 | IMAGE OBTAINING UNIT | 36 | DETERMINATION REGION IDENTIFYING UNIT |
|---|---|---|---|
| 24 | INDEX DERIVING UNIT | 38 | SUSPICIOUS OBJECT IDENTIFYING UNIT |
| 26 | IMAGE CONVERTING UNIT | 40 | OUTPUT CONTROL UNIT |
| 28 | INITIAL SEARCHING UNIT | | |
| 30 | SECONDARY SEARCHING UNIT | 50 | STORAGE UNIT |
| 32 | POINT SEARCHING UNIT | 52 | INITIAL AREA INFORMATION |
| | | 54 | IMAGE CONVERSION INFORMATION |
| 34 | TRACK RECOGNIZING UNIT | 56 | POINT INFORMATION |
| | | 58 | SUSPICIOUS OBJECT INFORMATION |

11

FIG. 3

START

Obtain Image — S100

Derive Index — S102

Convert Image to Birs's Eye Image — S104

Refer to Initial Area — S106

Establish A Plurality of Lines — S108

Select Line with Greatest Average Index Value — S110

Establish Characteristic Point based on Upper End of Selected Line — S112

Establish A Plurality of Lines in Fan-shaped Region — S114

Select Line with Greatest Average Index Value — S116

Establish Characteristic Point based on Upper End of Selected Line — S118

End Condition ? — S120

NO

YES

Identify Region Assumed to Be Railway Track by Aligning Characteristic Points — S122

Output Warning with Suspicious Object Exists in Image — S124

RETURN

FIG. 4

FIG. 5

FIG. 6

FIG. 7

FIG. 8

FIG. 9

(A)   (B)

# EP 3 614 342 A1

FIG. 10

| | 左端側（左レール） | 右端側（右レール） |
|---|---|---|
| 最初に選択された線の始点 | (x∗, y∗) | (x##, y∗) |
| 最初の特徴位置 | (x#, y∗) | (x∗, y##) |
| 2番目の特徴位置 | (x∗, y#) | (x##, y###) |
| 3番目の特徴位置 | (x∗∗, y∗) | (x∗#, y#∗) |
| 4番目の特徴位置 | (x∗, y∗∗) | (x#∗#, y∗) |
| 5番目の特徴位置 | (x∗#, y∗) | (x∗, y#∗#) |
| 6番目の特徴位置 | (x∗, y∗#) | (x#∗#, y∗) |
| ⋮ | ⋮ | ⋮ |

Start Point of Line Segment First Selected
Left End Side (Left Track)
Right End Side (Right Track)
56
First Characteristic Point
Second Characteristic Point
Third Characteristic Point
Fourth Characteristic Point
Fifth Characteristic Point
Sixth Characteristic Point

FIG. 11

16

FIG. 12

FIG. 13

Suspicious Object

注視物

FIG. 14

FIG. 15

60

FIG. 16

| | | | |
|---|---|---|---|
| 10 | CAMERA | 12 | DISPLAY UNIT |

20A

| | | | |
|---|---|---|---|
| 22 | IMAGE OBTAINING UNIT | 36 | DETERMINATION REGION IDENTIFYING UNIT |
| 24 | INDEX DERIVING UNIT | 38 | SUSPICIOUS OBJECT MONITORING UNIT |
| 26 | IMAGE CONVERTING UNIT | 40 | OUTPUT CONTROL UNIT |
| 28 | INITIAL SEARCHING UNIT | | |
| 30 | SECONDARY SEARCHING UNIT | | |
| 32 | POINT SEARCHING UNIT | | |
| 34 | TRACK RECOGNIZING UNIT | | |

50A

STORAGE UNIT

| | |
|---|---|
| 52 | INITIAL AREA INFORMATION |
| 54 | IMAGE CONVERSION INFORMATION |
| 56 | POINT INFORMATION |
| 58 | SUSPIOUS OBJECT INFORMATION |
| 62 | IDENTIFIED RAIL INFORMATION |

FIG. 17

AR#1

R2  R1

## INTERNATIONAL SEARCH REPORT

| International application No. |
| --- |
| PCT/JP2018/016313 |

**A. CLASSIFICATION OF SUBJECT MATTER**
Int.Cl. G06T7/60(2017.01)i, G06T7/00(2017.01)i

According to International Patent Classification (IPC) or to both national classification and IPC

**B. FIELDS SEARCHED**

Minimum documentation searched (classification system followed by classification symbols)
Int.Cl. G06T7/60, G06T7/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-2485 A (FUJI HEAVY INDUSTRIES LTD.) 09 January 2002, entire text (Family: none) | 1-7 |
| A | JP 2014-62415 A (MITSUBISHI ELECTRIC CORP.) 10 April 2014, entire text (Family: none) | 1-7 |

☐ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 July 2018 (10.07.2018) | 17 July 2018 (17.07.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016091506 A
- JP 2000032601 A